# EUROPÄISCHE PATENTSCHRIFT

(11) **EP 3 723 530 B1**
(45) Veröffentlichungstag und Bekanntmachung des Hinweises auf die Patenterteilung: **26.07.2023**
(21) Anmeldenummer: 18825601.0
(22) Anmeldetag: 12.12.2018
(51) Int. Cl.: A41D 13/008, A41D 31/26

(54) **PERSÖNLICHE AUSRÜSTUNG ZUM SCHUTZ VOR BLITZSCHLAGBEDINGTEN EREIGNISSEN**
PERSONAL EQUIPMENT FOR PROTECTING AGAINST EVENTS ATTRIBUTABLE TO LIGHTNING STRIKES
ÉQUIPEMENT DE PROTECTION INDIVIDUEL CONTRE DES INCIDENTS PROVOQUÉS PAR LA FOUDRE

(30) Priorität: 12.12.2017 DE 102017129652
(43) Veröffentlichungstag der Anmeldung: 21.10.2020
(73) Patentinhaber: DEHN SE, 92318 Neumarkt i.d. OPf. (DE)
(72) Erfinder: SEGER, Siegried, 92364 Deining (DE)
(74) Vertreter: Isarpatent
(86) Internationale Anmeldenummer: PCT/EP2018/084438
(87) Internationale Veröffentlichungsnummer: WO 2019/115569

(56) Entgegenhaltungen:
- DE-A1-102006 057 439
- KR-U- 20090 008 833
- US-A1- 2017 188 640

## Beschreibung

Die Erfindung betrifft eine persönliche Ausrüstung zum Schutz vor blitzschlagbedingten Ereignissen, insbesondere zur Anwendung außerhalb von mit einem äußeren Blitzschutz versehenen Objekten.

Die DE 10 2006 057 439 A1, welche den Oberbegriff des Anspruches 1 zeigt, offenbart eine persönliche Ausrüstung zum Schutz vor blitzschlagbedingten Ereignissen, insbesondere zur Anwendung außerhalb von mit einem äußeren Blitzschutz versehenen Objekten, wobei ein Metallgeflecht in Kleidungsstücke, Zelte oder Schlafsäcke integriert ist.

Aus der DE 1 632 485 A1 ist eine zeltartige Notunterkunft vorbekannt, welche mit Mitteln gegen eine Gefährdung der das Zelt benutzenden Personen durch Blitzschlag versehen ist.

Diesbezüglich ist das Zelt als Faradayscher Käfig ausgebildet und es ist ein im Gebrauch mit der Erde in leitender Verbindung stehendes Metallgestänge vorhanden. Am oder im Boden des Zeltes kann sich eine metallisierte Gummimatte oder Gummiwanne befinden, um ein Eindringen von Feuchtigkeit und sich am Erdboden sammelnden Regenwassers in das Zeltinnere zu verhindern. Die DE 1 557 383 A1 schlägt für ein Zelt zur Herabsetzung der Schrittspannung vor, die Grundfläche des Zeltes ganz oder teilweise aus einem elektrisch leitfähigen Werkstoff herzustellen.

Bei dem als Faradayscher Käfig ausgebildeten Zelt ist eine mit der Erde in leitender Verbindung stehende oder bringbare Grundplatte vorhanden, die im Zeltinneren eine Stand- oder Auflagefläche für die Füße des oder der Zeltbenutzer bildet. Durch den Faradayscher Käfig ist eine Sicherung gegen direkten Blitzeinschlag gegeben, während die Füße durch das Aufstellen auf die Grundplatte zwangsläufig so dicht nebeneinander kommen, dass eine schädliche Schrittspannung nicht mehr abgegriffen werden kann. Weiterhin kann die jeweilige schutzsuchende Person dadurch zur Einnahme einer solchen Sitzstellung und Sitzrichtung gezwungen werden, dass ihr Körper vom Faradayschen Käfig des Zeltes einen genügenden, eine versehentliche Berührung ausschließenden Abstand besitzt.

Aus der DE 20 2014 002 769 U1 ist eine Blitzschutzanlage für Wohnmobile oder Wohnwagen ohne metallische Außenhaut und ohne metallischen Dachgepäckträger vorbekannt. Diese Blitzschutzanlage besteht aus einer Anordnung zusammensteckbarer Fangstangen mit Klemmschelle und Flügelmutter zur Höhenverstellbarkeit. Darüber hinaus ist eine Kabelverbindung zu einem Erdanker vorgesehen.

Eine mobile Blitzschutzanlage zeigt die DE 20 2005 009 590 U1. Diese Anlage umfasst mindestens einen teilweise teleskopierbaren Mast, welcher mit einem Leiter zur Ableitung des Blitzstromes in Verbindung steht, wobei der Leiter zu mehreren Erdankern führt.

Bekannt ist darüber hinaus ein blitzableitender Regenschutz gemäß DE 20 2007 008 800 U1. Dieser Regenschutz besteht aus einem Material, welches mindestens eine leitfähige Schicht aufweist, so dass der Benutzer bei Anwendung des Regenschutzes sich quasi in einem Faradayschen Käfig befindet.

Als leitender Stoff kommt vorzugsweise ein dünner Metallfilm oder ein flexibles Drahtgeflecht bzw. Drahtgewebe zum Einsatz. Das leitende Material wird in eine dort vorgesehene Trägersubstanz eingebettet, um zum einen die leitende Schicht vor Beschädigung zu schützen. Zum anderen bleiben die Eigenschaften der Trägersubstanz weitgehend erhalten, und zwar im Hinblick auf wasserabweisende bzw. atmungsaktive Verbundmaterialien.

Der vorgeschlagene blitzableitende Regenschutz nach DE 20 2007 008 800 U1 mag zwar in gewisser Weise einen Faradayschen Käfig bilden, jedoch besteht das Problem, dass keine Erdverbindung vorliegt. Im Übrigen kann trotz des Tragens eines derartigen Regenschutzes im Falle eines Blitzeinschlages in der Nähe eine gefährliche, wenn nicht sogar tödliche Schrittspannung auftreten.

Bei den mit einem Schutzzelt verbundenen Einrichtungen in Form einer Bodenmatte zur Vermeidung von Schrittspannungen wird die Person gezwungen, in einer oftmals unbequemen Position zu verharren.

Gerade bei Freiluftveranstaltungen mit einer sehr großen Besucheranzahl befinden sich die Unterkünfte der Besucher sofern überhaupt vorhanden, regelmäßig abseits von der eigentlichen Veranstaltung bzw. Bühnenfläche. Im Falle eines aufziehenden Gewitters mit drohendem Blitzeinschlag ist es oftmals nicht möglich, alle Personen rechtzeitig und sicher zu evakuieren. In vielen Fällen wird daher ein heranziehendes Unwetter mit drohendem Blitzschlag abgewartet, ohne dass man sich den Risiken in jedem Falle bewusst ist.

Aus dem Vorgenannten ist es daher Aufgabe der Erfindung, eine weiterentwickelte persönliche Ausrüstung zum Schutz vor blitzschlagbedingten Ereignissen anzugeben, wobei diese persönliche Ausrüstung insbesondere zur Anwendung außerhalb von mit einem äußeren Blitzschutz versehenen Objekten geeignet und vorgesehen ist. Die persönliche Ausrüstung soll ohne als empfundener Ballast von der jeweiligen Person mitgeführt werden und im Übrigen eine universelle Benutzung, nicht nur zum Zweck der Vermeidung von Schrittspannungen ermöglichen.

Die Lösung der Aufgabe der Erfindung erfolgt mit der Merkmalskombination nach Patentanspruch 1, wobei die Unteransprüche mindestens zweckmäßige Ausgestaltungen und Weiterbildungen umfassen.

Erfindungsgemäß besteht die persönliche Ausrüstung aus einer zusammenleg-, zusammenroll- oder zusammenfaltbaren Unterlage aus einem leitfähigen oder eine leitfähige Beschichtung aufweisenden Material. Hierbei kann es sich beispielsweise um eine leitfähige Folie handeln.

Die Abmessungen der erfindungsgemäßen Unterlage sind so gewählt, dass im ausgelegten oder ausgerollten Zustand ein Sitzen, Hocken, Liegen oder Stehen einer schutzsuchenden Person auf der Unterlage sichergestellt wird.

Hierdurch sind Schrittspannungen zwischen den Körperteilen oder Extremitäten der schutzsuchenden Person vermeidbar.

Dadurch, dass die erfindungsgemäße Unterlage sowohl ein Sitzen, Hocken, Liegen oder Stehen auf der Unterlage ermöglicht, ist die jeweilige Person nicht gezwungen, über eine gegebenenfalls längere Zeit eine unbequeme Haltung einnehmen zu müssen.

Durch die Abmessungen lässt sich die Unterlage auch ganz grundsätzlich als Schutz gegen Bodenkälte, Feuchtigkeit, Schmutz oder Ungeziefer verwenden.

In einer bevorzugten Ausführungsform ist die Unterlage als Sitzkissen ausgebildet. Ein solches Sitzkissen umfasst neben der leitfähigen Komponente auch eine thermisch isolierende Komponente, beispielsweise ein Abstandsgewirke. Abstandsgewirke besitzen durch die besondere Ausbildung der Polfäden einen Luftzwischenraum, der einerseits in der Lage ist, die gewünschte thermische Isolierung zu schaffen und welche andererseits eine bestimmte Menge Feuchtigkeit aufnehmen und wieder abgeben kann, ohne dass bei Körperkontakt die betreffende Person das Gefühl hat, auf einer feuchten Oberfläche Platz zu nehmen.

Insofern ist in Weiterbildung der Erfindung die Unterlage mehrschichtig ausgebildet, wobei mindestens eine der Schichten die vorerwähnten thermisch isolierenden Eigenschaften aufweist.

In Weiterbildung der Erfindung ist ein mit der Unterlage verbindbarer, leitfähiger, flexibler Umhang vorhanden, um die Person vor Umwelteinflüssen wie Wind oder Regen zu schützen. Die Verbindung des Umhanges mit der Unterlage kann zum Beispiel über einen Reißverschluss oder durch Einknöpfen erfolgen. Maßgeblich ist hierbei auch eine elektrische Verbindung zwischen dem flexiblen Umhang und der leitfähigen Beschichtung bzw. der leitfähigen Seite der Unterlage.

Im Falle eines plötzlich hereinbrechenden Unwetters während einer Open Air-Veranstaltung ist die jeweilige Person nicht nur schrittspannungsseitig geschützt, sondern kann durch Umwerfen des Umhanges, insbesondere in Hock- oder Sitzstellung, vor Wind und Wetter geschützt werden.

Es liegt im Sinne der Erfindung, dass durch die funktionalen Nutzungsmöglichkeiten die Akzeptanz des Mitführens einer derartigen Unterlage mit oder ohne flexiblen Umhang erhöht wird, und zwar ähnlich der mittlerweile bereits gesetzlich geforderten Schutzfolien gegen Auskühlen als Bestandteil von Sanitätspackungen für Kraftfahrzeuge.

In bevorzugter Weise lässt sich die Unterlage auf Taschenformat und kleiner zusammenlegen.

Gemäß der Erfindung ist die Unterlage als langgestrecktes, flexibles Flächengebilde ausgeführt.

Mindestens auf einer Oberflächenseite sind Fußschlaufen oder taschenartige Öffnungen zur Aufnahme der Füße der schutzsuchenden Person vorgesehen, um ein zumindest bedingtes Bewegen bei gleichzeitigem Schrittspannungsschutz zu ermöglichen. Ein entsprechender Benutzer der Unterlage hat somit die Möglichkeit, sich aus der Gefahrenzone im Freien fortzubewegen und beispielsweise Schutz unter einem festen Unterstand zu suchen.

Das Basismaterial der Unterlage besteht bevorzugt aus einem Gewebe, Gestrick oder Gewirk oder aber einem Vliesmaterial. Wenn insoweit keine leitfähigen Fäden oder Fasern zum Einsatz kommen, kann das Gewebe, Gewirk, Gestrick oder das Vliesmaterial von einer metallischen oder metallisierten Folie umgeben sein.

Wenn insofern mindestens eine der Außenseiten der Unterlage noch strahlungsreflektierende Eigenschaften aufweist, kann unter Schönwetterbedingungen die Unterlage auch als Sonnenschutz bzw. Schutz vor Überhitzung, das heißt zum Verschatten, Verwendung finden.

Zur Ergänzung der Schutzwirkung bei Benutzung der Unterlage besteht im Sinne eines persönlichen Schutzsystems die Möglichkeit, eine teleskopierbare Fangstange einzusetzen, welche im Abstand zur Unterlage angeordnet und mit Erde verbunden wird.

Diesbezüglich besteht ein weiterer Gedanke der Erfindung darin, an sich bekannte Wander- oder Skistöcke ineinander steckbar auszugestalten, so dass eine Fangstange mit einer Höhe entsteht, die die zu schützende Person im hockenden oder sitzenden Zustand deutlich überragt.

Es wird also auch in diesem Sinne einem bekannten Wander- oder Skistock eine Doppelfunktion verliehen. Der ohnehin bei Wanderungen mitgeführte

Stock als Gehhilfe erfüllt bei einer diesbezüglich körperlichen Ausgestaltung im Sinne einer Steckbarkeit eine weitere, sinnvolle Funktion.

Um jedwege falsche Anwendungen der erfindungsgemäßen Unterlage nebst Umhang und/oder Wander- bzw. Skistock auszuschließen, ist mindestens die Unterlage mit piktogrammartigen Einsatz- und Benutzungshinweisen versehen.

Dabei kann es sich beispielsweise um symbolhafte Darstellungen einer vorteilhafter Weise einzunehmenden Position auf der Unterlage sowie um Anordnung der Wanderstock-Fangstange handeln.

Diese Anwendungshinweise sollen untrennbar mit der Unterlage verbunden oder auf diese aufgebracht werden, um zu verhindern, dass bei mehrfacher Benutzung eine entsprechende Anleitung nicht mehr vorhanden ist.

In einer Ausgestaltung können mindestens Abschnitte der Unterlage und/oder des Umhanges als flexibles, photovoltaisches Paneel ausgebildet werden.

Dieses photovoltaische Paneel steht dann mit einer elektrischen Ladeschaltung in Verbindung, welche zum Notfallbetreiben eines mobilen Kommunikationsgerätes, insbesondere eines Mobiltelefons ausgelegt ist. Die schutzsuchende Person hat insofern die Möglichkeit, auch im Falle eines stromversorgungsseitig nicht mehr betriebsbereiten Mobiltelefons zumindest einen Notruf absetzen zu können. Dabei ist es auch von Vorteil, die metallisierte Unterlage während des Verbindungsaufbaus mit Hilfe des Mobiltelefons zu nutzen, da die relativ große metallisierte Oberfläche ein Gegengewicht zur im Mobiltelefon integrierten Antenne bildet und mithin die Empfangs- und Sendeeigenschaften verbessern hilft.

Die Erfindung soll nachstehend anhand eines Ausführungsbeispieles näher erläutert werden.

Bei einer beispielhaften Unterlage wird von einem Folien-, Vlies- oder Gewebeverbund ausgegangen, welcher im ausgerollten Zustand Abmessungen etwa von 0,5 × 2 m aufweist.

Dieser Verbund ist zusammenlegbar derart, dass sich bei einem ersten Schritt des Zusammenlegens eine Sitzfläche von etwa 1 m Länge und 50 cm Breite ergibt. Die schutzsuchende Person kann auf der Unterlage Platz nehmen und die Füße abstützen.

Bei einem nochmaligen Schritt des Zusammenlegens entsteht eine kleinere Fläche von etwa 50 × 50 cm. Diese Fläche ermöglicht ein Stehen mit beiden Füßen auf der Unterlage oder aber das Einnehmen einer Hockposition.

Die Unterlage gemäß Ausführungsbeispiel kann an mindestens einer Seite über eine dort vorhandene Klettverbindung oder einen Reißverschluss geöffnet werden.

Im Inneren der Unterlage befindet sich ein folienartiger Umhang. Dieser kann aus der geöffneten Tasche herausgezogen werden und insbesondere beim Sitzen einen Schutz für Oberkörper und Kopf bilden.

Dabei ist der folienartige Umhang ebenfalls mit einer leitfähigen Beschichtung versehen, wobei der diesbezüglich leitfähige Umhang mit der leitfähigen Schicht der Unterlage elektrisch kontaktiert ist.

Nach Gebrauch besteht die Möglichkeit, den Umhang wieder in die taschenartige Öffnung der Unterlage hineinzustecken. Die Unterlage selbst kann nach Gebrauch zusammengelegt oder zusammengerollt werden, so dass ein leichter Transport möglich ist.

Zur Erhöhung des Komforts als Sitzkissen besteht die Möglichkeit, mindestens eine Schicht einer mehrschichtigen Unterlage als Abstandsgewirke auszubilden, um sicherzustellen, dass Feuchte nicht oder nur im geringen Maß in Kontakt mit dem Benutzer der Unterlage kommt.

Die Schutzausrüstung kann ergänzt werden durch eine leitfähige Fangstange, die beispielsweise aus zwei ineinander gesteckten, leitfähigen Wanderstöcken gebildet wird.

Diesbezüglich wird am ersten Wanderstock ein üblicherweise aus isolierendem Material befindlicher Griff durch Drehen entfernt. Die metallische Spitze des zweiten Wanderstocks wird dann von der Oberseite her in den ersten Wanderstock am Ort des entfernten Griffs hineingesteckt. Die Spitze des ersten Wanderstockes wird dann im Abstand zur Position der Unterlage und des Benutzers in den Boden gerammt.

Die Länge zweier üblicher, ineinander gesteckter Wanderstöcke und die sich hieraus ergebende Höhe der Fangstangeneinrichtung ist ausreichend, um einer sitzenden, hockenden oder liegenden Person ergänzenden Schutz zu gewähren.

## Patentansprüche

1. Persönliche Ausrüstung zum Schutz vor blitzschlagbedingten Ereignissen, insbesondere zur Anwendung außerhalb von mit einem äußeren Blitzschutz versehenen Objekten,
**gekennzeichnet durch** eine zusammenleg- oder zusammenrollbare Unterlage aus einem leitfähigen oder eine leitfähige Beschichtung aufweisenden Material mit Abmessungen, welche im ausgelegten oder ausgerollten Zustand ein Sitzen, Hocken, Liegen oder Stehen einer schutzsuchenden Person auf der Unterlage sicherstellen, derart, dass Schrittspannungen zwischen Körperteilen oder Extremitäten der Person vermeidbar sind, die Unterlage als langgestrecktes, flexibles Flächengebilde ausgeführt ist und auf mindestens einer Oberflächenseite Fußschlaufen oder taschenartige Öffnungen zur Aufnahme der Füße der schutzsuchenden Person vorgesehen sind, um ein zumindest bedingtes Bewegen bei gleichzeitigem Schrittspannungsschutz zu ermöglichen.

2. Persönliche Ausrüstung nach Anspruch 1,
**dadurch gekennzeichnet, dass**
diese als Sitzkissen ausgebildet ist.

3. Persönliche Ausrüstung nach Anspruch 1 oder 2,
**dadurch gekennzeichnet, dass**
die Unterlage mehrschichtig ausgebildet ist, wobei mindestens eine der Schichten thermisch isolierende Eigenschaften aufweist.

4. Persönliche Ausrüstung nach einem der vorangegangenen Ansprüche,
**dadurch gekennzeichnet, dass**
ein mit der Unterlage verbindbarer, leitfähiger, flexibler Umfang ausgebildet ist, um die Person vor Umwelteinflüssen, wie Wind oder Regen zu schützen.

5. Persönliche Ausrüstung nach einem der vorangegangenen Ansprüche,
**dadurch gekennzeichnet, dass**
die Unterlage auf Taschenformat oder kleiner zusammenlegbar ist.

6. Persönliche Ausrüstung nach einem der vorangegangenen Ansprüche,
**dadurch gekennzeichnet, dass**
die Unterlage aus einem Gewebe, Gestrick, Gewirk oder einem Vliesmaterial besteht oder ein solches Material enthält.

7. Persönliche Ausrüstung nach einem der vorangegangenen Ansprüche,
**dadurch gekennzeichnet, dass**
die Unterlage aus einem Abstandsgewirk besteht, welches leitfähige Fäden und/oder eine leitfähige Beschichtung aufweist.

8. Persönliche Ausrüstung nach einem der Ansprüche 1 bis 5,
**dadurch gekennzeichnet, dass**
die Unterlage aus einer metallisierten Folie besteht oder eine solche Folie aufweist.

9. Persönliche Ausrüstung nach einem der vorangegangenen Ansprüche,
**dadurch gekennzeichnet, dass**
zur Ergänzung der Schutzwirkung eine zusammensteckbare oder teleskopierbare, leitfähige Fangstange vorgesehen ist, welche im Abstand zur Unterlage anordenbar ist.

10. Persönliche Ausrüstung nach Anspruch 9,
**dadurch gekennzeichnet, dass**
die Fangstange aus miteinander verbindbaren, insbesondere steckbaren, Wander- oder Skistöcken besteht.

11. Persönliche Ausrüstung nach einem der vorangegangenen Ansprüche,
**dadurch gekennzeichnet, dass**
die Unterlage von ihr nicht oder nur zerstörend trennbar aufgebrachte, insbesondere aufgedruckte piktogrammartige Einsatz- und Benutzungshinweise aufweist.

12. Persönliche Ausrüstung nach einem der vorangegangenen Ansprüche,
**dadurch gekennzeichnet, dass**
mindestens Abschnitte der Unterlage als flexibles, photovoltaisches Paneel ausgebildet sind.

13. Persönliche Ausrüstung nach Anspruch 12,
**dadurch gekennzeichnet, dass**
das photovoltaische Paneel mit einer elektrischen Ladeschaltung in Verbindung steht, welche zum Notfallbetreiben eines mobilen Kommunikationsgerätes ausgelegt ist.

## Claims

1. Personal equipment for protecting against events attributable to lightning strikes, in particular for use outside structures provided with external lightning protection, **characterized by** a foldable or rollable base which is made of a conductive material or a material having a conductive coating and has dimensions which, in the laid-out or rolled-out state, ensure that a person seeking protection can sit, crouch, lie or stand on the base such that step voltages between body parts or extremities of the person are avoidable, the base is designed as an elongated, flexible sheet-like formation and foot straps or pocket-like openings for receiving the feet of the person seeking protection are provided on at least one surface side in order to allow at least restricted movement with at the same time protection from step voltages.

2. Personal equipment according to Claim 1, **characterized in that** it is formed as a seat cushion.

3. Personal equipment according to Claim 1 or 2, **characterized in that** the base is of a multilayered form, at least one of the layers having thermally insulating properties.

4. Personal equipment according to one of the preceding claims, **characterized in that** a conductive, flexible surround that can be connected to the base is designed to protect the person from environmental influences, such as wind or rain.

5. Personal equipment according to one of the preceding claims, **characterized in that** the base can be folded together to a pocket-sized format or smaller.

6. Personal equipment according to one of the preceding claims, **characterized in that** the base consists of a woven or knitted fabric or nonwoven material or contains such material.

7. Personal equipment according to one of the preceding claims, **characterized in that** the base consists of a spacer fabric which has conductive filaments and/or a conductive coating.

8. Personal equipment according to one of Claims 1 to 5, **characterized in that** the base consists of a metallized sheet or has such a sheet.

9. Personal equipment according to one of the preceding claims, **characterized in that** an interlocking or telescopic, conductive lightning rod, which can be arranged at a distance from the base, is provided to augment the protective effect.

10. Personal equipment according to Claim 9, **characterized in that** the lightning rod consists of hiking poles or ski poles that can be connected to one another, in particular can be interlocked.

11. Personal equipment according to one of the preceding claims, **characterized in that** the base has pictogram-like instructions for use that are inseparably attached or only destructively separably attached to the base, in particular are printed on.

12. Personal equipment according to one of the preceding claims, **characterized in that** at least portions of the base are formed as a flexible, photovoltaic panel.

13. Personal equipment according to Claim 12, **characterized in that** the photovoltaic panel is in connection with an electrical charging circuit, which is designed for the emergency operation of a mobile communications device.

## Revendications

1. Équipement personnel destiné à se protéger contre des événements liés à la foudre, notamment à être utilisé à l'extérieur d'objets pourvus d'une protection extérieure contre la foudre, **caractérisé par** une base repliable ou enroulable en un matériau conducteur ou un matériau comportant un revêtement conducteur dont les dimensions permettent, à l'état déplié ou déroulé, à une personne cherchant à se protéger de se tenir assise, accroupie, couchée ou debout sur la base de manière à éviter des tensions de pas entre des parties corporelles ou des extrémités de la personne, la base étant conçue comme une structure de surface allongée et flexible et des boucles de pieds ou des ouvertures en forme de poche étant prévues sur au moins un côté de la surface pour recevoir les pieds de la personne cherchant à se protéger afin de permettre un mouvement au moins limité avec une protection contre les tensions de pas.

2. Équipement personnel selon la revendication 1,
**caractérisé en ce que**
celui-ci est conçu comme un coussin de siège.

3. Équipement personnel selon la revendication 1 ou 2,
**caractérisé en ce que**
la base est conçue en plusieurs couches, au moins une des couches ayant des propriétés d'isolation thermique.

4. Équipement personnel selon l'une des revendications précédentes,
**caractérisé en ce que**
un périmètre flexible, conducteur et pouvant être relié au coussin est conçu pour protéger la personne contre des influences environnementales telles que le vent ou la pluie.

5. Équipement personnel selon l'une des revendications précédentes,
**caractérisé en ce que**
le coussin se replie au format de poche ou plus petit.

6. Équipement personnel selon l'une des revendications précédentes,
**caractérisé en ce que**
la base est en un matériau tissé, tricoté ou non-tissé ou contient un tel matériau.

7. Équipement personnel selon l'une des revendications précédentes,
**caractérisé en ce que**
la base est en un tissu d'espacement qui comporte des fils conducteurs et/ou un revêtement conducteur.

8. Équipement personnel selon l'une des revendications 1 à 5,
**caractérisé en ce que**
la base est une feuille métallisée ou comporte une telle feuille.

9. Équipement personnel selon l'une des revendications précédentes,
**caractérisé en ce que**
pour compléter l'effet protecteur, une tige de capture conductrice assemblable ou télescopique est prévue qui peut être disposée à distance de la base.

10. Équipement personnel selon la revendication 9,
**caractérisé en ce que**
la tige de capture comprend des bâtons de randonnée ou de ski pouvant être reliés, notamment enfichés, les uns avec les autres.

11. Équipement personnel selon l'une des revendications précédentes,
**caractérisé en ce que**
la base comporte des instructions d'utilisation et d'utilisation de type pictogramme qui sont placées, en particulier imprimées, sans pouvoir être séparées de ladite base ou en étant séparables uniquement de manière destructive.

12. Équipement personnel selon l'une des revendications précédentes,
**caractérisé en ce que**
au moins des portions de la base sont conçues comme un panneau photovoltaïque flexible.

13. Équipement personnel selon la revendication 12,
**caractérisé en ce que**
le panneau photovoltaïque est relié à un circuit de charge électrique qui est conçu pour le fonctionnement d'urgence d'un appareil de communication mobile.
